# EUROPEAN PATENT SPECIFICATION

(11) **EP 4 466 081 B1**
(45) Date of publication and mention of the grant of the patent: **11.03.2026**
(21) Application number: 22859530.2
(22) Date of filing: 22.12.2022
(51) Int. Cl.: B01D 25/00, B01D 25/164, B01D 25/172, B01D 25/34

(54) **IMPROVED FILTER PRESS**
VERBESSERTE FILTERPRESSE
FILTRE-PRESSE AMÉLIORÉ

(30) Priority: 20.01.2022 IT 202200000905
(43) Date of publication of application: 27.11.2024
(73) Proprietor: Dewater Filter Press S.r.l., 61038 Terre Roveresche (PU) (IT)
(72) Inventor: IERO, Antonio Emanuele, 40124 Bologna (BO) (IT)
(74) Representative: Provvisionato, Paolo
(86) International application number: PCT/IB2022/062663
(87) International publication number: WO 2023/139430

(56) References cited:
- EP-A1- 3 838 369
- CN-A- 110 302 568

## Description

### Field of the invention

The present invention relates to an improved filter press.

The invention has been developed with particular regard to a filter press which is used, for example, but in a non-limiting manner, in the sector of water treatment, waste water slurry treatment or process slurry treatment, in the chemical and pharmaceutical sector and in the mining sector.

### Technological background

The filter press is an industrial apparatus for discontinuous filtration, particularly for separating liquids and solids, for example, in order to dehydrate the waste water slurry in various sectors, among which the mining sector is particularly important as a result of the large quantities of slurry to be treated and consequently the dimensions of the machinery items used.

The known filter presses generally have a large number of filtering plates which are supported by a carrying structure. The filtering plates which have filtering webs on both the faces can be placed beside each other and be clamped in a pack by a hydraulic thrustor. In this manner, there is formed between one plate and another a filtration chamber which is delimited by the filtering webs. The slurry is pumped at high pressures inside these filtration chambers in such a manner that the solid phase is retained in the filtration chambers while the liquid phase, which can pass through the filtering webs, is discharged from the filter press through drainage channels which are formed in the plates. The solid portions of the suspension form dehydrated slurry panels which are called "cakes" and which are removed by opening the filter press with the release of the hydraulic thrustors so as to move the filtering plates apart. In the open configuration, normally the plates are shaken in order to promote the detachment or the falling of the cakes of dehydrated slurry by gravitational force. At the end of the filtration cycle, the plates are usually washed before again being clamped in a pack in order to repeat a new filtration cycle.

During operation of the known filter presses, it may be the case that it is necessary to replace from time to time a web or a filtering plate which breaks and which therefore no longer correctly carries out the filtering action thereof on the slurry. The procedure for replacing a web or a filtering plate is long, complex and tedious, particularly in machines with greater dimensions which are used, for example, for dehydrating slurries in the mining sector. In fact, it is necessary for specialist operators to climb to the top of the filter press in order to disassemble the web or the filtering plate. The new web or filtering plate then has to be positioned correctly and fixed. These maintenance operations involve manual operations, with a prolonged machine stoppage which increases the costs and reduces the productivity. Furthermore, it places the safety of the operators at risk.

It may be noted that the productivity of a filter press with a discontinuous process, such as the one described briefly above, depends on the volume of slurry which it is able to dehydrate in a given time period. In some sectors, such as the mining sector, the production of slurry to be dehydrated is substantial and continuous, for which each machine stoppage constitutes an important cost in the disposal process.

Another problem which is encountered in known filter presses is the slowness of the discontinuous filtration process particularly at the time of opening, that is to say, the movement of the filtering plates away from each other in order to discharge the dehydrated slurry cakes and subsequently to wash the webs and the filtering plates. Some known filter presses have a device for moving, shaking and washing the plates, which acts on groups of small numbers of filtering plates at one time, typically approximately ten filtering plates. These filter presses are therefore very slow and offer low productivity, particularly when they comprise several tens of filtering plates.

In other known filter presses, the movement of the filtering plates beside each other and away from each other is carried out by means of a motorized carriage which is installed behind a movable end head in a position in which it is subjected to being contaminated with processed water and slurry. Furthermore, in this case the movement of the plates away from each other is not directly controllable because the motorized carriage acts only on the movable end head which gradually drags behind all the plates which are linked to each other. This limits the number of filtering plates which can be used in a single filter press because, with an increase in the filtering plates, it becomes more and more difficult to correctly and completely open the pack of filtering plates for the detachment step of the dehydrated slurry cakes.

The known filter presses have a system for washing the filtering plates and the filtering webs thereof in order to remove the slurry residues which are bonded thereto and thereby to take up the initial filtering capacity before reactivating the filtering cycle once more. Some known washing systems are of the rainfall type which sprays all the group of plates. However, these known systems for washing filter presses also spray the entire structure of the filter press, including the mechanisms thereof, which brings about a deterioration thereof over time because the washing water is often industrial water which is rich in corrosive salts.

In the known filter presses, the detachment of the dehydrated slurry cakes from the webs of the filtering plates which are moved apart from each other is promoted by the shaking of the plates or filtering webs. However, it may be noted that the known shaking systems are not very effective when the type of solid residue is particularly adhesive with respect to the plates themselves, for example, when argillaceous slurries are involved. The result is that under these conditions it is necessary to increase the shaking time in order to obtain a correct detachment of all the dehydrated slurry cakes with a consequent reduction in the overall productivity of the filter press.

Furthermore, the known filter presses are limited in terms of the maximum achievable dimensions, being able to receive at a maximum - in the machines with greatest dimensions - approximately 200 filtering plates (with a maximum of 210 filtering plates in the filter presses to the knowledge of the Applicant). Mainly, the limitation to a maximum number of approximately 200 filtering plates of the known filter presses is a result of the limitations mentioned above in terms of time necessary for opening, discharging and washing the plates/filtering webs, and by the limitations in terms of force necessary to move the plates and to retain them beside each other in a pack under pressure during the filtering step. Another limitation is the excessive length of the filter press which would be necessary to provide space for simultaneously opening so many filtering plates.

In order to increase the dimensions of the filter presses, use is made of a double supply of the slurry to be dehydrated. The slurry is thus supplied to the inlet at both end heads, the fixed head and the movable head, of the pack of filtering plates which are placed beside each other in the closed configuration of the filter press. The greater the number of filtering plates, the greater is the difference in length between the first filtering plate and the last filtering plate with the machine closed, when the plates are in a pack, and with the machine open, when the plates are moved apart from each other in order to remove the dehydrated slurry and to wash the filtering webs. In order to carry out the supply to the end of the movable head, the known filter presses use flexible or articulated tubes for supplying the slurry, which, however, encounter limits in terms of length which contribute to imposing the maximum limit number of filtering plates which can open in a simultaneous manner as set out above.

The limitation of the dimensions of the known filter presses and the number of filtering plates which can be used at the same time for a filtering cycle constitutes a significant limit particularly in, for example, mining applications, wherein large volumes of slurry have to be treated.

CN 110302568 A discloses a filter press with a limited number of filter plates which are mounted on a frame that has two lateral beams onto which the filter plates are slidingly supported. A hoisting mechanism is mounted on a different frame so that it can move along the filter press for replacing a filter cloth of a filter plate.

EP 3838369 A1 discloses a lifting system for automatically lifting from a filter press one or more filter support members suspending each at least two parallelly extending filter cloth portions. A lifting frame is configured to be moved in a direction towards the filter support member into a locking position in which a coupling can be activated thereby interlocking the lifting frame and the filter support member, thus allowing lifting of the filter support member. The lifting frame has a plurality of lifting eye bolts for connection to a traverse, a crane or other lifting arrangements.

### Statement of invention

An object of the invention is to overcome one or more of the disadvantages of the known filter presses by providing a filter press which minimizes the downtimes during operation and maintenance, increasing the hourly productivity thereof and the operational availability with respect to conventional filter presses. Another object is to provide a filter press in which the production, control and maintenance costs are reduced. Another object is to provide a filter press which is simple to use and which does not require risky maintenance operations on behalf of the operators. Another object is to provide a filter press which can also be constructed with considerable dimensions with a high number of filtering plates without encountering insurmountable obstacles in terms of design, operation or cost.

In order to achieve one or more of the above-indicated objects, the invention relates to a filter press having the features indicated in the appended claims.

According to a first aspect, there is described an improved filter press which comprises a support structure which can extend in a longitudinal direction. A group of filtering plates which are each provided with an individual filtering web can be mounted on the support structure. The filtering plates can be movable in the longitudinal direction in order to alternately change from an open configuration, in which some or all of the filtering plates can be spaced apart from each other, to a closed configuration, in which the filtering plates can all be clamped in a pack. An equipped movable group, for example, a robotized group, is also described. The equipped movable group can be mounted in a movable manner in the longitudinal direction on the support structure. The equipped movable group may comprise at least one lifting device. The lifting device is suitable for selectively lifting, that is to say, on request, a filtering plate or also only the filtering web associated with this filtering plate, so as to remove it from the group of filtering plates. The lifting device may comprise a gripping device for engaging with the plate with the filtering web or only the filtering web to be lifted. The lifting device may comprise a lifting member which is connected to the gripping device in order to lift the filtering plate or only the filtering web which is engaged therewith. With the same lifting device, it is possible to lower a filtering plate or only the filtering web thereof in order to insert it into a predetermined position in the group of filtering plates. This is advantageous in order to automatically remove from the filter press a filtering plate or only the filtering web thereof which may be defective or damaged and which no longer carries out an effective filtering action and to replace it with an integral replacement filtering plate or an integral replacement filtering web, respectively, which are held in stock. The automatic removal and replacement of the damaged filtering plate or filtering web, respectively, with an integral filtering plate or an integral filtering web eliminates the risks and downtimes which would otherwise be necessary to carry out a similar maintenance operation in the known filter presses.

In the present description set out below, reference will mainly be made, for the sake of simplicity of description, to the automatic removal of a filtering plate, which is provided with a filtering web. However, it is intended that the solutions described, the operational characteristics, the construction details and the advantages relating to the movement of such a filtering plate, including the removal, replacement, positioning and transport thereof carried out and any other operation carried out by means of the movable equipped group and specifically via the lifting device, are similarly applicable to the filtering webs alone, if they are mounted in a separable manner from the respective filtering plates, for example, by means of a support which separably joins the filtering web to the relevant filtering plate.

According to a particular aspect, which can also be used independently of the other aspects described, the filtering plates may comprise support members which can be separated in the vertical direction from corresponding movement carriages or generally movement members which are functionally similar. These movement members, preferably but in a non-limiting manner in the form of movement carriages, can be slidable in the longitudinal direction in order to allow the filtering plates to change from the open configuration to the closed configuration, and vice versa. Preferably, each filtering plate can be supported by at least one pair of movement carriages which are located at the two sides of the filtering plate. The movement carriages can each be provided with a respective housing for a corresponding support member of the filtering plate. The support member can be secured to the corresponding movement carriage in the longitudinal direction, but remaining free in the vertical direction so as to be able to be removed from the housing by lifting the filtering plate, in particular by means of the lifting device of the equipped movable group.

Advantageously, the movement carriages and more generally the movement members on which the filtering plates are suspended can be linked to each other, for example, by means of connection members of the type with links, connecting rods, mesh or other interlinking members of a functionally similar type. The connection members allow the movement members to be placed beside each other in such a manner that the filtering plates are packed in the closed filtration configuration. The connection members can further allow the carriages or movement members to be moved apart from each other by a predetermined distance in such a manner that the filtering plates are simultaneously moved away from each other in order to rapidly discharge the dehydrated solid fraction. In order to simultaneously move away the filtering plates, it is intended that, by moving a single filtering plate, the linked opening of other filtering plates connected thereto is brought about, substantially with an "accordion-like" opening effect. The connection members can link the movement members or carriages and therefore the filtering plates to each other in such a manner that a chain of filtering plates can be pulled in the longitudinal direction by pulling a single filtering plate or the movable end head.

According to another advantageous aspect, which can also be used independently of the other aspects described, the filter press may comprise a store, preferably a movable store, which can receive at least one filtering plate or a filtering web which is removed from the group of filtering plates and to receive at least one replacement plate or filtering web to replace the filtering plate or filtering web which has been removed from the group, respectively. The store can be positioned at a longitudinal end of the support structure. The store may be reachable by the movable equipped group for setting down and removing at least one filtering plate or filtering web. In particular, there can be set down in the store a filtering plate or a filtering web which is damaged and which has been taken from the group of filtering plates which are supported by the support structure, and there can be taken from the store a filtering plate or a filtering web in stock to replace the damaged one in the group of filtering plates. The removal and setting down operations in this replacement operation can advantageously be carried out via the movable equipped group.

According to another advantageous aspect, which can also be used independently of the other aspects described, the movable equipped group may comprise an engaging system. With this engaging system, it is possible to selectively engage the movable head of the filter press or at least one filtering plate. With the engaging system of the movable equipped group, it is possible to pull or urge all the filtering plates or groups thereof into the open configuration or into the closed configuration in the longitudinal direction, respectively.

According to another aspect, which can also be used independently of the other aspects described, each filtering plate can be provided with a control nozzle. Using these control nozzles, it is possible to remove as required samples of the filtered liquid from each filtering plate. A vision system can be provided in order to detect abnormal colorations of these samples of liquid and thereby to identify one or more filtering plates or filtering webs which is/are defective or damaged. For example, it is possible to identify the control nozzle or nozzles from which a liquid which is darker than the other liquids is discharged, which demonstrates that the corresponding plate(s) is/are not correctly carrying out the filtering function and has/have to be replaced.

According to another advantageous aspect, which can also be used independently of the other aspects described, the filter press may comprise a shaking system for the filtering plates in order to promote the detachment of the solid dehydrated portion of the liquid substances. The shaking system may comprise shaking members for the filtering plates. The shaking members for the filtering plates may provide for lifting and lowering at least one side or only one side of the filtering plates, by imparting thereto a shaking action in the vertical plane and a simultaneous oscillation about a longitudinal axis. Advantageously, the shaking members can be configured and provided so as to bring about an oscillation of adjacent plates in opposite directions. This simultaneous oscillation of the adjacent plates in opposite directions, as a result of which they substantially oscillate in counter-phase, promotes the detachment of the dehydrated solid portion, that is to say, the dehydrated slurry cake between the two adjacent plates, with an increase in the efficiency and the discharge speed of the dehydrated solid fraction of the filter press, with positive results on the productivity of the filtration process.

According to another aspect described, which can also be used independently of the other aspects described, the filter press is of the type comprising a double supply in order to supply the material to be filtered to both longitudinal ends, that is to say, the fixed and movable heads, respectively, of the group of filtering plates when they are closed in a pack.

There is described an advantageous supply system, in which the movable head can be stably connected to a pipe which, in the open configuration of the group of filtering plates, is spaced apart from a supply branch. This pipe approaches the supply branch during the closure movement of the filtering plates until it is connected in a fluid-tight manner to the supply branch when the plates are closed in a pack in the closed filtration configuration.

### Brief description of the drawings

Additional features and advantages will be appreciated from the following detailed description of a preferred embodiment with reference to the appended drawings, which are given by way of non-limiting example and in which:
- Figure 1 is a perspective view of an example of a filter press incorporating features of the present invention, in an open configuration for discharging the slurry cakes and cleaning the filtering plates/webs, in which a number of supply and discharge pipes have been dispensed with or simplified for the sake of greater clarity of illustration;
- Figure 2 is a perspective view of a detail of the closure system of the filter press of Figure 1 when it is in a closed filtering configuration;
- Figure 3 is a perspective view of the connection of a supply pipe to the movable head when the double supply of the filter press with the material to be filtered is provided;
- Figure 4 is a perspective view of a movement apparatus of the filtering plates of the filter press of Figure 1;
- Figure 5 is a perspective view of the movement apparatus of the filtering plates according to the arrow V of Figure 4;
- Figure 6 is a view of a detail of the group for engaging the movement apparatus of Figures 4 and 5, with the plates of the filter press of Figure 1;
- Figure 7 is a perspective view which shows the mutual connection between some of the filtering plates of the filter press of Figure 1; and
- Figure 8 is a perspective view which shows a detail of the movement carriages of the filtering plates and the shaking system thereof.

### Detailed description

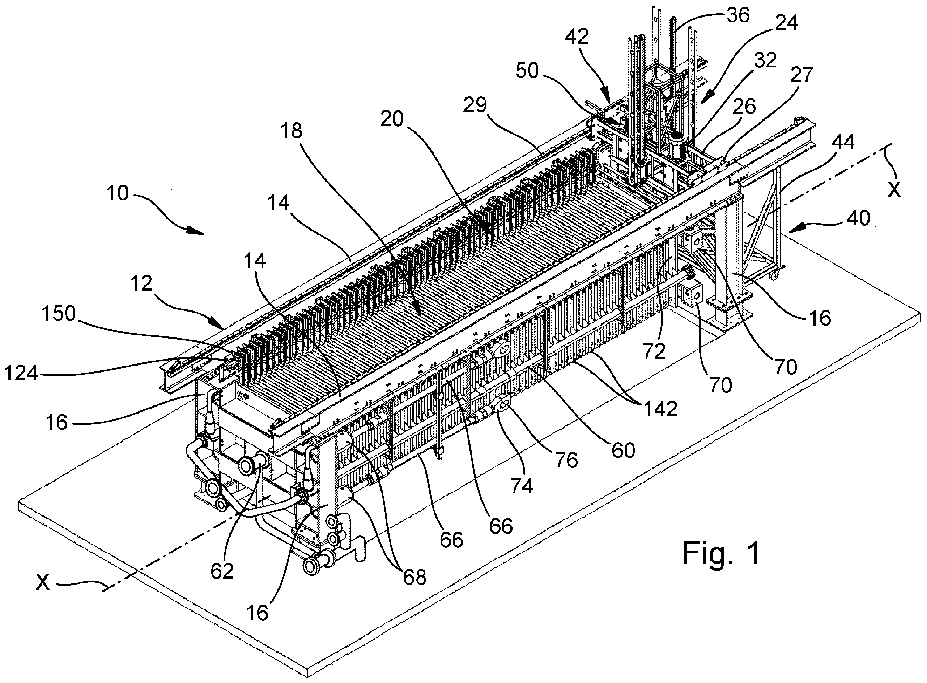

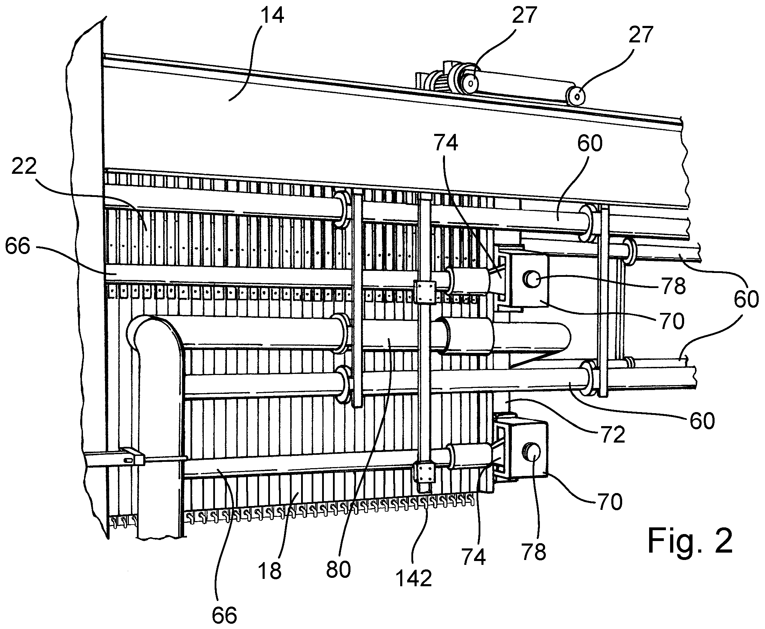

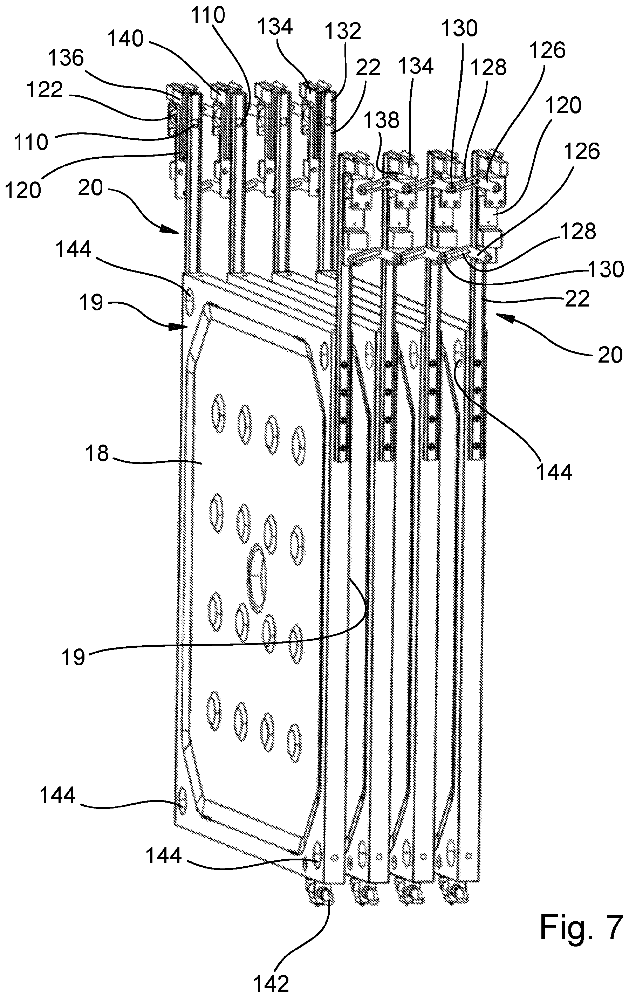

With reference now to Figure 1, there is illustrated an example of a filter press 10 incorporating one or more characteristics of the present invention. The filter press 10 comprises a support structure 12 which has at least one pair of longitudinal members 14 which are supported by uprights 16. The longitudinal members 14 have a linear extent in a longitudinal direction X-X. The support structure 12 supports a group 13 of filtering plates 18. As can better be seen in Figure 7, each filtering plate 18 has a generally planar structure with a quadrangular shape with two opposing faces 19, on which two strips, which are joined together or separate, of a filtering web, which is not illustrated in Figure 7 for reasons of clarity, extend. Support members 20, for example, a pair of support rods 22 which are fixed at the two sides of the filtering plate 18, extend from each filtering plate 18. The filtering plates 18 are mounted on the support structure 12 with the faces 19 orthogonal with respect to the main longitudinal direction. The filtering plates 18 are mounted so as to be movable in the longitudinal direction X-X by means of movement carriages 120 (which can better be seen in Figure 7) so as to be able to be detached and moved away from each other, as illustrated in Figure 1, in an open configuration of the filter press 10. This is a configuration in which the dehydrated slurry can be discharged and it is possible to carry out the cleaning of the filter press 10. In a state mounted so as to be movable on the support structure 12, the filtering plates 18 can be positioned beside each other and can be clamped in a pack as illustrated, for example, in the detail of Figure 2, in such a manner that between one plate and another there is formed, in known manner, a filtration chamber which is delimited by the filtering webs.

The support structure 12 is modular. It is possible to assemble a plurality of support structures 12 in the direction of the longitudinal direction X-X in order to obtain filter presses with various lengths and with a very high number of filtering plates. Taking, for example, the support structure 12 of Figure 1 which supports sixty filtering plates 18, it is possible to join four of them of the same type in a line in order to obtain a filter press with 240 filtering plates, with a higher level of productivity than any filter press currently commercially available. There will be described below other features which allow the dimensions and the filtering capacity of the filter press to be scaled up by combining a plurality of modular support structures.

There is provided on the support structure 12 a movable equipped group 24, for example, a robotized group. The movable equipped group 24 is mounted in a movable manner on the support structure 12 in the longitudinal direction X-X. The movable equipped group 24 comprises a carriage 26 which is provided with wheels 27 which are supported on linear tracks or guides 29 which are mounted on the longitudinal members 14. For the traction of the carriage 26, there is provided a transmission system which is controlled by one or more motors 32. In the example of Figure 1, there is fixed to each longitudinal member 14 a rack 28, with which one or more toothed wheels 30 engage(s). Two motors 32, one for each side of the carriage 26, are preferably provided.

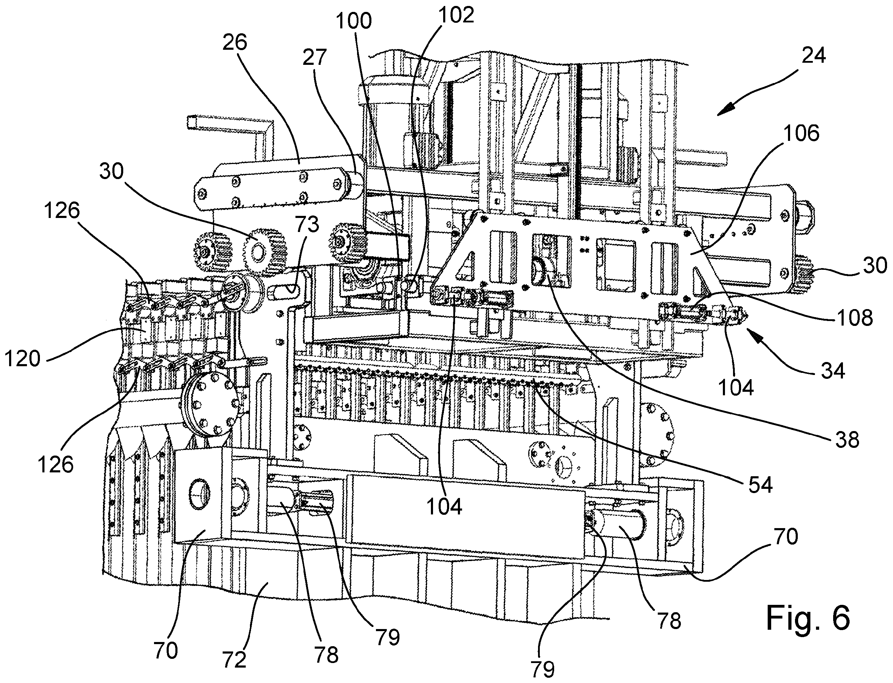

In order to move the filtering plates 18 in the longitudinal direction X-X, there is mounted on the movable equipped group 24 an engaging system 100 which will be described in greater detail below with reference to Figure 6. The engaging system 100 can selectively engage with a movable head 72 which is placed at the end of the group of filtering plates 18 and which is movable in the longitudinal direction X-X. Once the engaging system 100 is engaged with the head 72, the movement of the movable equipped group 24 in the direction X-X brings about, in accordance with the direction of the movement, the closure in a pack of the filtering plates 18 or the simultaneous opening thereof. To this end, the support members 20 of the filtering plates 18 are formed so as to link together the filtering plates 18 in the longitudinal direction X-X. The engaging system 100 can also move, where applicable, a selected group of filtering plates 18, by being inserted between two filtering plates and the movement carriages 120 of filtering plates 18 which are adjacent. It is thereby also possible to provide the filter press with a very high number of filtering plates, for example, more than 200 plates, which can be moved in groups by the movable equipped group 24.

There is also mounted on the movable equipped group 24 a gripping device 34, by means of which it is possible to engage in a controlled manner with any filtering plate 18. The gripping device 34 is mounted on a lifting member 36 which is actuated by a motor 38. The filtering plate 18 which is engaged by the movable equipped group 24 by means of the gripping device can therefore be moved in the vertical direction. The lifting member 36 which is mounted on the movable equipped group 24 therefore allows automatic removal of a filtering plate 18 from the group of filtering plates 18 which is mounted on the filter press 10. This is particularly advantageous if it is necessary to replace a filtering plate 18, for example, because it is defective, and for which it is necessary to replace the filtering web. The filtering plate 18 to be replaced is engaged by the gripping device 34 and is lifted by the lifting member 36, the vertical path of which is configured so as to raise the lower edge of the filtering plate 18 to be replaced above the upper edge of the other filtering plates which are mounted on the filter press. With the filtering plate 18 being lifted in this manner, the movable equipped group can be controlled in order to move into a deposit zone, in particular a movable store which is installed at the edge of the filter press, where the filtering plate 18 to be replaced can be deposited. With a transposed manoeuvre, the movable equipped group 24 can take from the movable store a replacement plate or filtering web which is transported in a raised state into the free position in the group 13 of filtering plates in order to then be lowered and blocked in the desired position, as will be described in greater detail below.

The plates or filtering webs to replace the defective ones which have been removed from the filter press 10 are stored in a store 40, preferably a movable store, which is provided at one end 42 of the filter press 10, at the opposite side to the side against which the filtering plates 18 are placed in the filtering configuration, where a fixed head is provided. The store 40 preferably comprises a movable framework 44 which is, for example, mounted on rollers. Gradually as the replacement filtering plates are removed from the store 40 in order to be used in the filter press, the store 40 is filled with defective filtering plates or filtering webs which are removed from the filter press. When the last replacement filtering plate or filtering web has been used, the movable framework 44 can be moved away from the filter press and replaced with a new movable framework with other replacement filtering plates or filtering webs.

The movable equipped group 24 can reach and extend above the store 40 for filtering plates or filtering webs so as to position at that location a defective filtering plate or filtering web or to remove a replacement filtering plate or filtering web. To this end, the longitudinal members 14 preferably extend cantilevered so as to also extend the linear tracks or guides 29 and, if provided, the respective racks 28. The defective filtering plate or filtering web 18 which is removed from the group 13 of filtering plates of the filter press can therefore be readily transported and deposited in the store 40 by the movable equipped group, which can subsequently engage in the same store 40 with a replacement filtering plate or filtering web 18 to be transported and inserted in place of the defective one in the group 13 of filtering plates of the filter press 10.

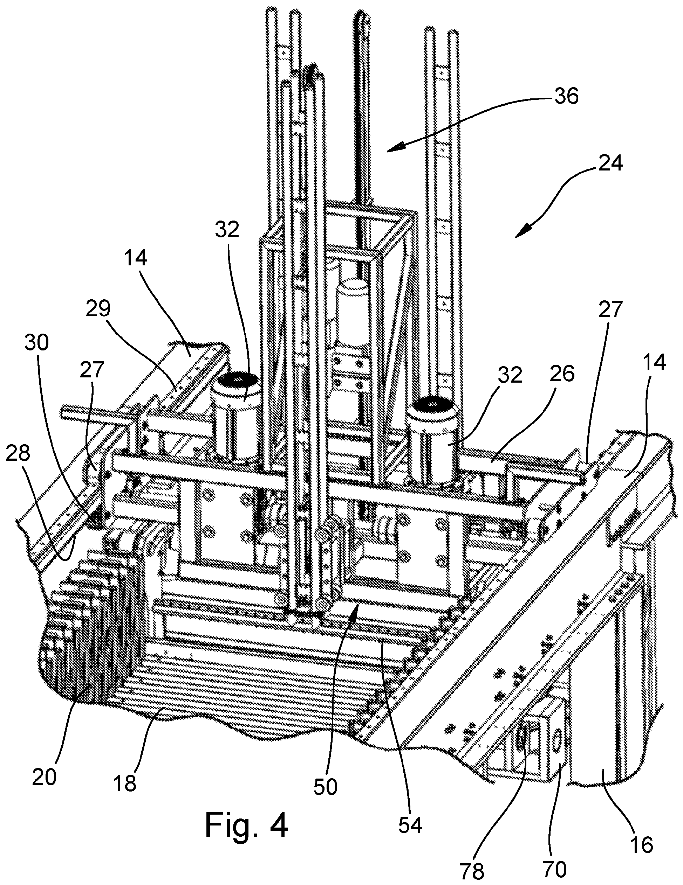

There can also be mounted on the movable equipped group 24 a washing device 50 for the filtering plates 18 which can be seen in greater detail in Figure 4. The washing device 50 comprises a series of washing nozzles which are mounted on a vertically movable washing tool 52 so as to be introduced in the spaces between one filtering plate and the next when the filter press is in the discharge and washing configuration illustrated in Figure 1. Preferably, the washing nozzles are mounted or formed on a transverse washing rod 54. The washing nozzles are connected to a washing water supply circuit, the characteristics of which are generally known and which will not therefore be described in detail. The lowering and raising of the washing tool 52 are controlled by a motor via transmission members. The motor can be dedicated to the washing tool 52 or can be the same motor as the one used for controlling the lifting member 36.

There run along the sides of the filter press 10 longitudinal washing pipes 60, by means of which it is possible to simultaneously wash the pack of filtering plates, particularly if it is completely opened, or also in the case of opening with groups of plates, preferably in two groups. The washing pipes 60 therefore carry out rapid and simultaneous washing of the filtering plates. This solution allows all the filtering plates to be washed in a few seconds, ensuring correct closure of the pack of plates in each cycle even when extremely friable dehydrated slurries are discharged, such as mining slurries, which tend to contaminate the abutments between one filtering plate and another. The washing pipes 60 are advantageously installed under the mechanical movement members of the filter press and in particular under the movable equipped group 24 and the movement carriages 120 of the filtering plates 18, increasing the reliability over time of the filter press because in this manner the washing water, which is often aggressive, does not touch the movement members.

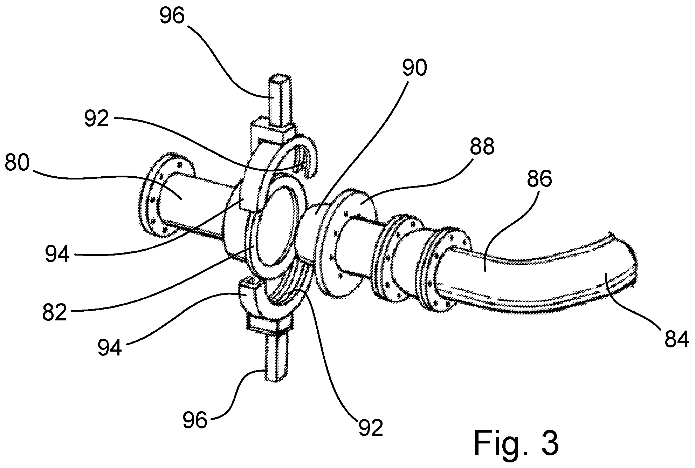

The slurries to be dehydrated are supplied in a central zone of the filtering plates 18, according to prior art, through a supply pipe 62 which branches so as to communicate from both sides with the group 13 of filtering plates 18 which are placed beside each other in a pack. Therefore, the supply pipe 62 communicates with both the first and the last filtering plate 18 of the pack of filtering plates in the filtering configuration shown in Figure 2. In this configuration, the filtering plates are clamped to each other by means of tie rods 66 which are connected to respective hydraulic thrustors 68 so as to withstand the high pressures which occur inside the filtration chambers between one filtering plate and another when the slurry to be dehydrated is supplied. The tie rods 66 extend longitudinally in the direction X-X and there are preferably four of them, two per side of the filter press 10. The ends of the tie rods 66 opposite the thrustors 68 can be blocked by bolts 70 which are mounted on the movable head 72 which closes the pack of filtering plates 18 in the filtering configuration of the filter press. To this end, there are provided at the ends of the tie rods 66 respective flat heads 74, in which there are formed corresponding transverse holes 76, in which respective blocking pins 78 which are provided in the bolts 70, which can also be seen in Figures 2 and 3 and in the detail of Figure 6, can be inserted, where the control webs 79 of the blocking pins which are actuated in a controlled manner by an actuator (not visible in Figure 6) are also visible.

Figure 3 illustrates in greater detail an example of the double supply system of the filter press, wherein the connection of one supply branch 80 of the supply pipe 62 of the slurries with respect to the movable head 2 can be seen, and therefore with respect to the last filtering plate 18 when the filter press is moved from the open discharge and washing configuration to the closed filtering configuration. The supply branch 80 terminates with a flange 82 which is preferably circular. There projects from the movable head 72 a pipe 84 with a final section 86 which is axially aligned with the supply branch 80. At the end of the final section 86, a flange 88 which is identical to the flange 82 of the supply branch is constructed. There projects from the flange 88 a conical opening 90 which is configured to centre and precisely align the final section 86 with respect to the supply branch 80. In the filtering configuration of the filter press, the two flanges 80, 88 move into abutment and can be blocked inside the grooves 92 of two semi-circular blocking members 94 which are positioned beside each other at opposite sides by means of actuators 96. In order to unblock the two flanges and to release the connection between the pipe 84 and the supply branch 80, it is simply necessary to move the blocking members 94 away from each other.

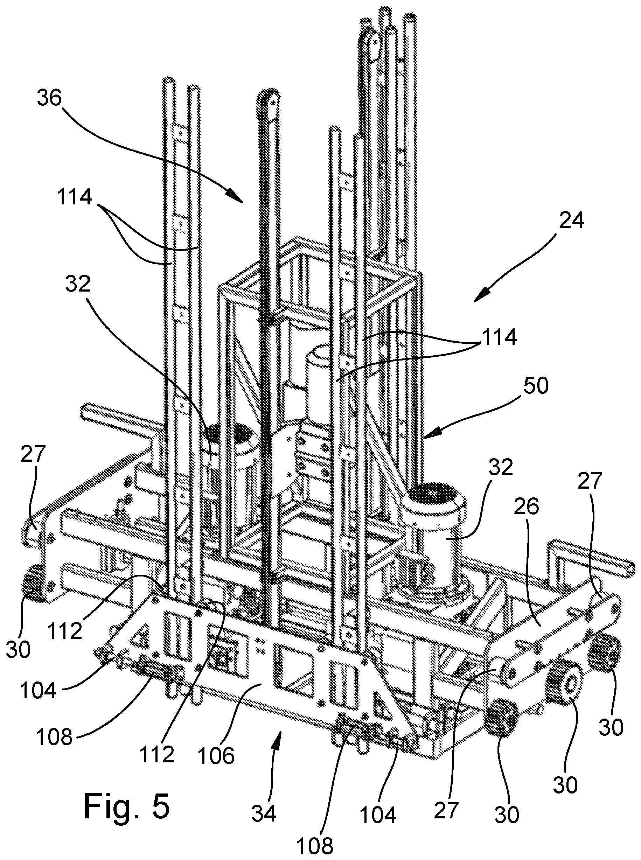

Figures 5 and 6 illustrate in greater detail the engaging system 100 of the movable head 72 in order to move it in the longitudinal direction X-X which can also be used to move, if necessary and/or advantageous, groups of filtering plates 18 in the same longitudinal direction X-X. The engaging system 100 comprises pegs or pins 102, preferably two per side, which are actuated in a controlled manner by corresponding actuators in order to block or release the movable head 72. The detail of Figure 6 shows two slots 73 which are formed, one per side, in the sides of the movable head 72. In the slots 73, the pins 102 intersect in order to bring about the connection between the head 72 and the movable equipped group 24. The insertion of both pins 102 in the slot 73 which is formed in the movable head 72 ensures orthogonal movement, without any oscillations, of the movable head 72 during the closing and opening step of the pack of filtering plates 18. In this manner, the head 72 is further kept braked during the acceleration and deceleration steps of the movable equipped group 24 during the movement thereof in the longitudinal direction 24. This is important for ensuring correct packing of the pack of filtering plates 18. When the movable head 72 is engaged with the tie rods 66 during the clamping step under pressure of the filtering plates, the movable head 72 is disengaged from the engaging system 100 and therefore from the movable equipped group 24. The head 72 is therefore free to be inclined and adapted to any deformations of the pack of filtering plates, thereby ensuring a uniform distribution of the closure pressure which is applied by the thrustors 68 to the pack of filtering plates 18 in the closed configuration of the filter press. This ensures correct clamping of the pack of plates under all working conditions, including with packs of plates which are very long with more than 200 plates.

The engaging system 100 can also be used to move groups of filtering plates 18, for example, if the number thereof is high and therefore it is very inconvenient or complicated to simultaneously open the entire pack of filtering plates by acting only on the movable head 72. In this case, the engaging system 100 is interposed between the movement carriages 120 of two adjacent filtering plates 18. In this case, it is preferable to have only one pin 102 projecting per side. Preferably, some movement carriages, for example, one for every twenty filtering plates, are provided to be urged by the engaging system 100 and for this they are reinforced in order to better support the traction force which is imparted thereto by the movable equipped group 24 during the movement in the longitudinal direction X-X.

The engaging system 100 described above provides flexibility for the filter press. In fact, it is possible to pull the movable head 72 in order to open and close the entire pack of filtering plates 18 in a single action or to open for groups the pack of filtering plates. For example, if there are provided a high number of filtering plates, for example, in the order of 200 plates or more, the opening of the filtering plates, for example, in two groups, allows less machine space to be occupied with respect to opening the entire pack of plates in a single action and, at the same time, allows extremely rapid discharge times to be had. This makes it possible to install a greater number of filtering plates in a given space, ensuring in any case a high discharge rate for the dehydrated slurry. If groups of plates are opened, the first group of filtering plates is opened by pulling the movable head 72. The group or successive groups is/are opened by pulling the movement carriages 120 of the intermediate plate(s) as set out in the design step, which are preferably movement carriages of the reinforced type.

Figures 5 and 6 also show in greater detail the gripping device 34 and the lifting member 36 which are used to vertically move where necessary the single filtering plates. The gripping device 34 comprises a pair of horizontal pins or pegs 104 which are mounted one per side on a support plate 106. The horizontal pins 104 are connected to respective actuators 108. The horizontal pins 104 can move on request from the retracted position, illustrated in Figure 5, to an extracted position, in which they are inserted in holes 110 which are formed in the support rods 22 of the filtering plates 18 (see Figure 7). There are mounted on the support plate 106 grooved wheels 112 which run on two pairs of vertical guide bars 114 in order to guide the support plate 106 during the lifting and lowering movement which is controlled by the lifting member 36 which is fixed to the centre of the support plate 106.

As can be seen in Figure 7, each filtering plate 18 is supported at the sides by two respective movement carriages 120 so as to be able to be vertically disengaged from the movement carriages themselves. The movement carriages 120 are supported with the wheels 122 thereof on two respective longitudinal support guides 124 (see Figure 1). All the movement carriages 120 arranged on the same side are linked together, preferably by means of connection members 126 of the type with clips, connecting rods, mesh, or sliding guides, which are called "ocarinas" in the jargon, or other linking members which are functionally similar. One end of each connection member 126 is articulated to a respective movement carriage 120. There is formed in each connection member 126 a slot 128, in which a slider 130 which projects from an adjacent movement carriage 120 engages in a sliding manner. The slider 130 is coaxial with the articulation axis of the connection member 126. In this manner, the filtering plates 18 can be juxtaposed and clamped as a pack one against the other, remaining linked by means of the connection members 126. When the filtering plates 18 are moved away from each other, the connection members 126 retain the filtering plates 18 at a maximum distance from each other given by the maximum excursion of the sliders 130 inside the slots 128. The movement carriages 120 and therefore the filtering plates 18 are thereby linked to each other so that, by pulling one of them, it is possible to also pull all the other ones which follow it in the chain of the connection members 126.

The filtering plates 18 are removably mounted on the movement carriages 120 in a vertical direction. To this end, the support rods 22 of the filtering plates 18 each have an upper end 132 with a transverse extension piece 134 which provides them with an inverted L-shaped configuration. The transverse extension pieces 134 are supported in housings 136 which are provided in the upper portion of the movement carriages 120. The housings 136 each have a lower wall 138, on which the transverse extension piece 120 is securely supported. Two lateral walls 140 of the housings 136 secure the movement of the filtering plate 18 in the longitudinal direction X-X with respect to the relative movement carriage 120. The lateral walls 140 are flared in the upper region in order to facilitate the introduction of the transverse extension piece 134 in the housing 136 when the filtering plate 18 is inserted in position by the lifting member 36 which is mounted on the movable equipped group 24.

A control nozzle 142 is arranged in the filtering plates 18 with a valve, by opening which it is possible to discharge a small quantity of the filtrate, that is to say, the liquid fraction which is removed from the slurry which, by passing through the filtering web, is disposed of through the channels which are formed in the four corners of the filtering plates when the openings 144 which are formed to this end in the filtering plates are joined in longitudinal alignment. The colour of the liquid which is discharged from the control nozzle 142 makes it possible to verify whether the corresponding filtering plate 18 is working efficiently or whether, on the contrary, it is not able to correctly or completely perform the filtering action, for example, as a result of the filtering web breaking. At locations where the liquid is darker, it is possible to infer that the filtering plate or web is damaged. A damaged filtering plate or web can be replaced rapidly and economically via the lifting member 36 of the movable equipped group 24. The control of the liquid which is discharged from the control nozzles 142 can be carried out visually by a person skilled in the art or there can be provided an automated solution using, for example, a video-camera which is provided via software to recognize the colour of the filtrate and the position of the plate. Preferably, the video-camera is activated only when an excessive presence of solid particulate is detected in the liquid which is removed from the slurries. To this end, there may be provided a suspended solid sensor installed in the general collector of filtered discharge. When not in use, the objective lens of the camera is closed automatically in order to protect it from dust. The software of the video-camera can operate a zonal scanning, recognizing the specific control nozzle 142 from which turbid liquid is being discharged, therefore the darkest colour, thereby identifying the specific damaged filtering plate or web to be replaced.

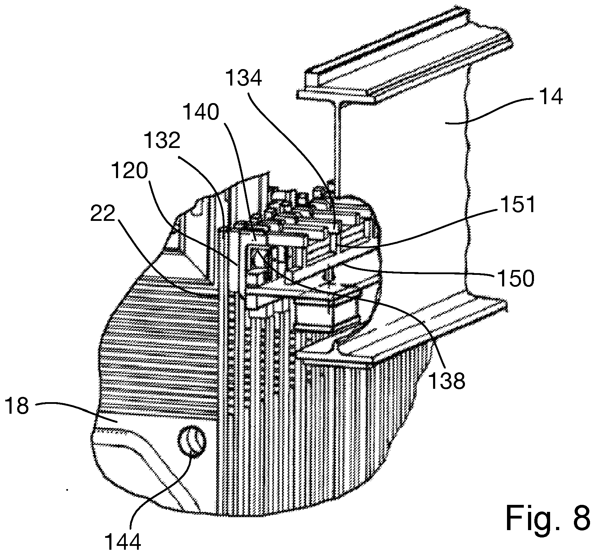

As can better be seen in Figure 8, there are arranged under all the ends of the transverse extension pieces 134 shaking bars 150 which during the discharge step of the dehydrated slurry are repeatedly raised and lowered rapidly so as to shake the filtering plates 18. Advantageously, the shaking bars 150 engage with the transverse extension pieces 134 simultaneously, alternately and in a manner staggered at the two sides of the filter press so as to impart to the filtering plates an oscillating movement about a longitudinal axis which imparts a torsional movement to the cake of dehydrated solid to be discharged. In order to achieve this, there project from the shaking bars 150 vertical extension pieces 151 which urge the transverse extension pieces 134 of alternate filtering plates 18 so as to raise them from the respective housings in the movement carriages 120. The shaking bars 150 which are arranged at the two sides of the filter press have vertical extension pieces 151 which are staggered, that is to say, so that there corresponds to a space between two vertical extension pieces 151 at one side of the filter press a vertical extension piece 151 at the other side, and vice versa. In this manner, it is possible to actuate the shaking bars 150 so that adjacent filtering plates are subjected to oscillation in counter-phase about the longitudinal axis so as to promote a better and faster detachment of the cake of dehydrated slurry from the surface of the adjacent filtering plates. The lifting and therefore the oscillation of the two adjacent plates is carried out simultaneously in order to impart a torsional effect to the surfaces of the cake of dehydrated slurry which eliminates or substantially reduces the surface adhesion forces between the dehydrated slurry cake and the filtering webs, thereby substantially improving the efficacy and the efficiency of the discharge of the dehydrated slurry cake.

Before starting a filtration cycle for the slurries, the filter press is in the open configuration shown in Figure 1. In order to start the cycle, the movable equipped group 24 engages with the movable head 72 by means of the pins 102. The head 72 is urged against the filtering plates 18 so as to gradually move them together until they are juxtaposed in a pack.

When the filtering plates 18 are in a pack, the bolts 70 are closed and the tie rods 66 are activated with the activation of the hydraulic thrustors 68. During this manoeuvre, in the case of double supply the supply branch 80 of the supply pipe 62 is connected to the final section 86 of the pipe 84 which communicates with the movable head 72. When the flanges 82 and 88 are juxtaposed, the actuators 86 of the block members 84 which clamp the two flanges together are activated.

At this point, the filter press is in the closed filtering configuration and is ready to be supplied with the slurries to be dehydrated in known manner. The slurry is supplied by pumping it under high pressure inside the filtration chambers which are formed between a filtering plate 18 and the adjacent ones in such a manner that the solid phase is retained in the filtration chambers while the liquid phase, which passes though the filtering webs, is removed from the filter press 10 though drainage channels which are formed in the filtering plates 18.

When the desired degree of dehydration is achieved, as calculated on the basis of the specific characteristics of the slurry, the dimensions of the filter press and other technical parameters as known to the persons skilled in the art, the filter press is changed to the open configuration for discharge and washing as illustrated in Figure 1. It is possible to act by pulling the movable head 72 by means of the movable equipped group which also pulls all the filtering plates 18 as a result of the linking of all the movement carriages 120.

Where applicable, particularly when the filter press 10 comprises a high number of filtering plates 18 which are installed in a small space which does not allow the simultaneous opening of all the filtering plates, the discharge step of the slurry cakes can be divided over two or more groups of filtering plates which can be separated from each other by engaging the first movement carriage 120 of each individual group of filtering plates 18 with the engaging system 100, which is fitted to the movable equipped group 24. In order to promote the detachment of the dehydrated slurry from the filtering plates 18, they are shaken and caused to oscillate by activating the shaking bars 150 which rapidly raise the transverse extension pieces 134. The shaking and particularly the oscillation in counter-phase of the adjacent filtering plates bring about the rapid detachment of the dehydrated slurry from the faces of the filtering plates.

Subsequently, the filtering plates 18 are washed using water which is introduced through in the longitudinal pipes 60, typically though not in a limiting manner at a pressure of or approximately of 5 bar. To this end, the pipes 60, two at the top and two at the bottom, are provided with nozzles which are located between one filtering plate and the next when the pack of plates is open. Water is introduced by means of a pump (not illustrated) into the pipes 60 which are connected externally, at the side of the filter press at which the hydraulic thrustors 68 are mounted, by means of a common connection collector. This type of washing is very rapid because it allows washing within a few seconds, for example, approximately 30 seconds, of all the pack of filtering plates 18. This type of washing, as described above, can be advantageously carried out when the opening of the pack of plates is carried out in a single action and the filtering plates are all spaced apart from each other or when the discharge is divided into two groups of filtering plates.

Cyclically, usually every 70 to 100 cycles, the filtering plates 18 are washed one by one at high pressure, typically but not exclusively at or approximately at 50 bar, as a result of the washing tool 52. In particular, the movable equipped group 24 is gradually moved in the longitudinal direction X-X so as to initially lower and then raise the washing rods 54 in each of the spaces between the filtering plates 18, supplying water which is discharged from the washing nozzles in order to clean the filtering web which is placed on the faces 19 of the filtering plates 18.

When the pack of plates is open, it is possible to replace a filtering plate or filtering web which is damaged. To this end, the filtering plate/web 18 to be replaced is engaged with the gripping device 34, the horizontal pins 104 of which engage in the holes 110 which are formed in the support rods 22 of the filtering plate 18 to be replaced. The lifting member 36 of the movable equipped group 24 then provides for lifting the damaged filtering plate/web 18. By doing this, the transverse extension pieces 134 of the support members 20 are removed from the housings 136 of the movement carriages 120. The lifting member 36 lifts the damaged filtering plate 18 until it moves the lower edge thereof above the movement carriages 120. At this point, the damaged filtering plate 18 which is suspended on the lifting member 36 by means of the gripping device 34 can be transported by the movable equipped group 24 to the end of the filter press 10, where the store 40 is located. The damaged filtering plate 18 is lowered into a free space of the store 40. In order to support the filtering plates, there may be provided in the store 40 suitable spaces in which the transverse extension pieces 134 of the filtering plates can be received in housings which are generally similar to the ones provided on the movement carriages 120. Alternatively, more simply the store 40 can be provided with longitudinal support bars for the transverse extension pieces 134 of the filtering plates 18.

After depositing the damaged filtering plate/web in the store 40, the gripping device 34 is released in order to disengage the damaged filtering plate/web. The movable equipped group is then moved near a replacement filtering plate/web which is present in the store 40. The replacement filtering plate/web is engaged by the gripping device 34, lifted by the lifting member 36 and transported by the movable equipped group in the longitudinal direction X-X until it reaches the position from which the damaged filtering plate/web was removed. In this position, the lifting member 36 lowers the replacement filtering plate 18 so as to insert the transverse extension pieces 134 in the housings 136 of the movement carriages 120 which are left free by the damaged filtering plate which has been removed beforehand. When the transverse extension pieces 134 are supported and support the replacement filtering plate 18, the gripping device 34 can be disengaged and raised in order not to interfere with the operations of the filter press 10.

The positioning of the filtering plates/webs which are damaged in the store 40 and the removal of the replacement filtering plates/webs therefrom can be carried out manually, in a manner directed by an operator who moves the movable equipped group as far as the deposit or removal location of the filtering plate, or can be automated by means of known techniques which use position sensors, vision devices or other automatic positioning means of the movable equipped group 24 in the desired operating position.

The provision of the movable equipped group and in particular the carriage which can run longitudinally along the entire upper portion of the filter press constitutes a practical, economical and effective solution for carrying out the ordinary and extraordinary operations of the filter press. In fact, the movable equipped group can move the head of the filter press in order to open or close the pack of filtering plates. It may make provision, by means of the cleaning device which is mounted on-board the carriage, for cleaning the filtering webs on the faces of the filtering plates when the filter press has finished a filtration cycle and is in the open configuration. It may also make provision, by means of the gripping device, for moving in the longitudinal direction an individual filtering plate by bringing about the opening or closing of a limited group of adjacent plates. By means of the lifting member which is connected to the gripping device, it is possible to carry out the extraordinary operation of maintaining and replacing a defective or damaged filtering plate/web with a replacement filtering plate/web.

Naturally, the principle of the invention remaining the same, the forms of embodiment and details of construction may be varied widely with respect to those described and illustrated without thereby departing from the scope of the present invention.

## Claims

1. An improved filter press comprising:
- a support structure (12) which extends in a longitudinal direction (X-X),
- a group (13) of filtering plates (18) which are provided with filtering webs and which are supported on the support structure (12) and which are movable in the longitudinal direction (X-X) from an open configuration, in which some or all of the filtering plates (18) are spaced apart from each other, to a closed configuration, in which the filtering plates (18) are all clamped in a pack,
- an equipped movable group (24) which is mounted in a movable manner in the longitudinal direction (X-X) on the support structure (12),
wherein the equipped movable group (24) comprises at least one lifting device (34, 36) for selectively lifting a filtering plate (18) or a filtering web and so as to remove it from the group (13) of filtering plates.

2. An improved filter press according to claim 1, further comprising movement carriages (120) which are movable in the longitudinal direction (X-X) in order to allow for the filtering plates (18) to change from the open configuration to closed configuration, and vice versa, wherein the filtering plates (18) comprise support members (20, 22) secured to a corresponding movement carriage (120) in the longitudinal direction (X-X) and remaining free in the vertical direction, so that the support members can be separated in the vertical direction from the movement carriages (120).

3. An improved filter press according to claim 2, wherein the movement carriages (120) are linked to each other.

4. An improved filter press according to any one of the preceding claims, wherein the lifting device (34, 36) comprises a gripping device (34) for engaging with the filtering plate (18) or the filtering web to be raised, and a lifting member (36) which is connected to the gripping device (34) in order to lift the filtering plate (18) or the filtering web which is engaged.

5. An improved filter press according to any one of the preceding claims, comprising a store (40), preferably a movable store, which can receive at least one filtering plate (18) or a filtering web which is removed from the group (13) of filtering plates and to receive at least one replacement filtering plate (18) or filtering web to replace the filtering plate (18) or filtering web which has been removed from the group (13) of filtering plates.

6. An improved filter press according to claim 5, wherein the store (40) is positioned at a longitudinal end of the support structure (12), the store being able to be reached by the movable equipped group (24) for setting down and/or removing at least one filtering plate (18) or filtering web.

7. An improved filter press according to any one of the preceding claims, wherein the movable equipped group (24) comprises an engaging system (100) in order to selectively engage a movable head (72) or at least one movement member (120) or at least one filtering plate (18) in order to pull or urge the filtering plates (18) into the open configuration or into the closed configuration in the longitudinal direction (X-X), respectively.

8. An improved filter press according to any one of the preceding claims, wherein each filtering plate (18) is provided with a control nozzle (142) in order to remove as required samples of filtered liquid from each filtering plate (18), a vision system being provided in order to detect abnormal colorations of the samples of liquid and to identify the position of one or more filtering plates which is/are defective or damaged.

9. An improved filter press according to any one of the preceding claims, comprising a shaking system (150) for the filtering plates (18) in order to promote the detachment of the solid dehydrated portion in the open configuration of the filtering plates, the shaking system (150) being configured to lift and lower simultaneously a side opposite the adjacent filtering plates (18) by imparting thereto a shaking action in the vertical plane and a simultaneous oscillation about a longitudinal axis, bringing about a torsional effect on the dehydrated solid portion.

10. An improved filter press according to any one of the preceding claims, comprising a double supply in order to supply the material to be filtered to both longitudinal ends of the group of filtering plates (18) which are closed in a pack, wherein the movable head (72) is stably connected to a pipe (84) which, in the open configuration of the group of filtering plates (18), is spaced apart from a supply branch (80), the pipe (84) approaching the supply branch (80) during the closure movement of the filtering plates until it is connected in a fluid-tight manner to the supply branch (80) in the configuration closed in a pack of the filtering plates (18).

11. An improved filter press according to any one of the preceding claims, wherein the support structure (12) has at least one pair of longitudinal members (14) having a linear extent in the longitudinal direction (X-X), the equipped movable group (24) comprising a carriage (26) which is provided with wheels (27) which are supported on linear tracks or guides (29) which are mounted on said longitudinal members (14).

12. An improved filter press according to any one of the preceding claims, wherein a washing device (50) for the filtering plates (1() is mounted on the equipped movable group (24).

13. An improved filter press according to claim 12, wherein the washing device (50) comprises washing nozzles which are mounted or formed on a transverse washing rod (54)on a vertically movable washing tool 52 so as to be introduced in the spaces between one filtering plate and the next when the filter press is in the discharge and washing configuration illustrated in Figure 1.

## Patentansprüche

1. Verbesserte Filterpresse, umfassend:
- eine Trägerstruktur (12), die sich in einer Längsrichtung (X-X) erstreckt,
- eine Gruppe (13) von Filterplatten (18), die mit Filtergeweben versehen sind, auf der Trägerstruktur (12) getragen werden und in der Längsrichtung (X-X) von einer offenen Konfiguration, in der manche oder alle Filterplatten (18) voneinander beabstandet sind, in eine geschlossene Konfiguration bewegbar sind, in der alle Filterplatten (18) zu einem Paket verspannt sind,
- eine ausgerüstete bewegliche Einheit (24), die in Längsrichtung (X-X) bewegbar auf der Trägerstruktur (12) montiert ist,
wobei die ausgerüstete bewegliche Einheit (24) zumindest eine Hebevorrichtung (34, 36) zum selektiven Anheben einer Filterplatte (18) oder eines Filtergewebes umfasst, um diese aus der Gruppe (13) der Filterplatten zu entnehmen.

2. Verbesserte Filterpresse nach Anspruch 1, ferner umfassend Bewegungsschlitten (120), die in der Längsrichtung (X-X) bewegbar sind, um den Übergang der Filterplatten (18) von der offenen Konfiguration in die geschlossene Konfiguration und umgekehrt zu ermöglichen, wobei die Filterplatten (18) Stützelemente (20, 22) umfassen, die in Längsrichtung (X-X) an einem entsprechenden Bewegungsschlitten (120) befestigt sind und in vertikaler Richtung frei bleiben, sodass die Stützelemente in vertikaler Richtung von den Bewegungsschlitten (120) getrennt werden können.

3. Verbesserte Filterpresse nach Anspruch 2, wobei die Bewegungsschlitten (120) miteinander verbunden sind.

4. Verbesserte Filterpresse nach einem der vorstehenden Ansprüche, wobei die Hebevorrichtung (34, 36) eine Greifvorrichtung (34) zum Eingriff mit der anzuhebenden Filterplatte (18) oder dem Filtergewebe sowie ein Hubelement (36) umfasst, das mit der Greifvorrichtung (34) verbunden ist, um die erfasste Filterplatte (18) oder das Filtergewebe anzuheben.

5. Verbesserte Filterpresse nach einem der vorstehenden Ansprüche, umfassend ein Magazin (40), bevorzugt ein bewegbares Magazin, das zumindest eine Filterplatte (18) oder ein Filtergewebe aufnehmen kann, die bzw. das aus der Gruppe (13) der Filterplatten entfernt wurde, und das zumindest eine Ersatz-Filterplatte (18) oder ein Ersatz-Filtergewebe aufnehmen kann, um die aus der Gruppe (13) der Filterplatten entfernte Filterplatte (18) oder das entfernte Filtergewebe zu ersetzen.

6. Verbesserte Filterpresse nach Anspruch 5, wobei das Magazin (40) an einem Längsende der Trägerstruktur (12) angeordnet ist, wobei das Magazin von der ausgerüsteten bewegichen Einheit (24) zum Absetzen und/oder Entnehmen zumindest einer Filterplatte (18) oder eines Filtergewebes erreichbar ist.

7. Verbesserte Filterpresse nach einem der vorstehenden Ansprüche, wobei die ausgerüstete bewegliche Einheit (24) ein Eingriffssystem (100) umfasst, um selektiv einen bewegbaren Kopf (72) oder zumindest einen Bewegungsschlitten (120) oder zumindest eine Filterplatte (18) zu erfassen, um die Filterplatten (18) in Längsrichtung (X-X) entweder in die offene Konfiguration oder in die geschlossene Konfiguration zu ziehen oder zu drücken.

8. Verbesserte Filterpresse nach einem der vorstehenden Ansprüche, wobei jede Filterplatte (18) mit einer Steuerventildüse (142) versehen ist, um bei Bedarf Proben der gefilterten Flüssigkeit aus jeder Filterplatte (18) zu entnehmen, wobei ein Sichtsystem vorgesehen ist, um abnormale Verfärbungen der Flüssigkeitsproben zu erkennen und die Position einer oder mehrerer fehlerhafter oder beschädigter Filterplatten zu identifizieren.

9. Verbesserte Filterpresse nach einem der vorstehenden Ansprüche, umfassend ein Schüttelsystem (150) für die Filterplatten (18), um das Ablösen des festen entwässerten Anteils in der offenen Konfiguration der Filterplatten zu fördern, wobei das Schüttelsystem (150) so ausgelegt ist, dass es eine der benachbarten Filterplatten (18) abgewandte Seite gleichzeitig anhebt und absenkt, indem dieser eine Schüttelbewegung in der vertikalen Ebene sowie eine gleichzeitige Schwingung um eine Längsachse übertragen wird, wodurch ein Torsionseffekt auf den entwässerten Feststoffanteil erzeugt wird.

10. Verbesserte Filterpresse nach einem der vorstehenden Ansprüche, umfassend eine doppelte Zuführung, um das zu filtrierende Material an beide Längsenden der zu einem Paket zusammengeschlossenen Gruppe von Filterplatten (18) zuzuführen, wobei der bewegbare Kopf (72) fest mit einem Rohr (84) verbunden ist, das in der offenen Konfiguration der Gruppe der Filterplatten (18) von einem Zufuhrabzweig (80) beabstandet ist, wobei sich das Rohr (84) während der Schließbewegung der Filterplatten dem Zufuhrabzweig (80) annähert, bis es in der zu einem Paket geschlossenen Konfiguration der Filterplatten (18) fluiddicht mit dem Zufuhrabzweig (80) verbunden ist.

11. Verbesserte Filterpresse nach einem der vorstehenden Ansprüche, wobei die Trägerstruktur (12) zumindest ein Paar von Längsträgern (14) aufweist, die sich linear in der Längsrichtung (X-X) erstrecken, wobei die ausgerüstete bewegliche Einheit (24) einen Schlitten (26) umfasst, der mit Rädern (27) versehen ist, die auf linearen Schienen oder Führungen (29) abgestützt sind, welche auf den genannten Längsträgern (14) montiert sind.

12. Verbesserte Filterpresse nach einem der vorstehenden Ansprüche, wobei eine Wascheinrichtung (50) für die Filterplatten (18) auf der ausgerüsteten beweglichen Einheit (24) montiert ist.

13. Verbesserte Filterpresse nach Anspruch 12, wobei die Wascheinrichtung (50) Waschdüsen umfasst, die an einer quer verlaufenden Waschstange (54) eines vertikal bewegbaren Waschwerkzeugs (52) montiert oder ausgebildet sind, sodass sie in die Zwischenräume zwischen jeweils einer Filterplatte und der nächsten eingeführt werden können, wenn sich die Filterpresse in der in Figur 1 dargestellten Entleerungs- und Waschkonfiguration befindet.

## Revendications

1. Filtre-presse amélioré comprenant :
- une structure de support (12) qui s'étend dans une direction longitudinale (X-X),
- un groupe (13) de plaques filtrantes (18) qui sont munies de toiles filtrantes et qui sont supportées sur la structure de support (12) et sont mobiles dans la direction longitudinale (X-X) d'une configuration ouverte, dans laquelle tout ou partie des plaques filtrantes (18) sont espacées les unes des autres, vers une configuration fermée, dans laquelle les plaques filtrantes (18) sont toutes fixées en un seul ensemble,
- un groupe mobile équipé (24) qui est monté de manière mobile dans la direction longitudinale (X-X) sur la structure de support (12),
dans lequel le groupe mobile équipé (24) comprend au moins un dispositif de levage (34, 36) destiné à lever sélectivement une plaque filtrante (18) ou une toile filtrante de façon à la retirer du groupe (13) de plaques filtrantes.

2. Filtre-presse amélioré selon la revendication 1, comprenant en outre des chariots en mouvement (120) qui sont mobiles dans la direction longitudinale (X-X) afin de permettre aux plaques filtrantes (18) de passer de la configuration ouverte à la configuration fermée, et inversement, dans lequel les plaques filtrantes (18) comprennent des éléments de support (20, 22) fixés sur un chariot en mouvement correspondant (120) dans la direction longitudinale (X-X) et qui restent libres dans la direction verticale, de sorte que les éléments de support puissent être séparés, dans la direction verticale, des chariots en mouvement (120).

3. Filtre-presse amélioré selon la revendication 2, dans lequel les chariots en mouvement (120) sont reliés les uns aux autres.

4. Filtre-presse amélioré selon l'une quelconque des revendications précédentes, dans lequel le dispositif de levage (34, 36) comprend un dispositif de préhension (34) destiné à s'engager avec la plaque filtrante (18) ou la toile filtrante à soulever, et un élément de levage (36) qui est relié au dispositif de préhension (34) afin de lever la plaque filtrante (18) ou la toile filtrante qui est engagée.

5. Filtre-presse amélioré selon l'une quelconque des revendications précédentes, comprenant un stockage (40), de préférence un stockage mobile, qui peut recevoir au moins une plaque filtrante (18) ou une toile filtrante qui est retirée du groupe (13) de plaques filtrantes et destiné à recevoir au moins une plaque filtrante (18) ou une toile filtrante de rechange afin de remplacer la plaque filtrante (18) ou la toile filtrante qui a été retirée du groupe (13) de plaques filtrantes.

6. Filtre-presse amélioré selon la revendication 5, dans lequel le stockage (40) est positionné à une extrémité longitudinale de la structure de support (12), le stockage pouvant être atteint par le groupe équipé mobile (24) afin de déposer et/ou de retirer au moins une plaque filtrante (18) ou une toile filtrante.

7. Filtre-presse amélioré selon l'une quelconque des revendications précédentes, dans lequel le groupe équipé mobile (24) comprend un système d'engagement (100) destiné à engager sélectivement une tête mobile (72) ou au moins un élément en mouvement (120) ou au moins une plaque filtrante (18) afin de tirer ou de pousser les plaques filtrantes (18) dans la configuration ouverte ou dans la configuration fermée dans la direction longitudinale (X-X), respectivement.

8. Filtre-presse amélioré selon l'une quelconque des revendications précédentes, dans lequel chaque plaque filtrante (18) est munie d'une buse de commande (142) afin de retirer si nécessaire des échantillons de liquide filtré de chaque plaque filtrante (18), un système de vision étant prévu afin de détecter des colorations anormales des échantillons de liquide et d'identifier la position d'une ou plusieurs plaques filtrantes qui est/sont défectueuse(s) ou endommagée(s).

9. Filtre-presse amélioré selon l'une quelconque des revendications précédentes, comprenant un système d'agitation (150) destiné aux plaques filtrantes (18) afin de faciliter le détachement de la partie déshydratée solide dans la configuration ouverte des plaques filtrantes, le système d'agitation (150) étant configuré pour lever et abaisser simultanément un côté opposé aux plaques filtrantes adjacentes (18) en transmettant à celui-ci une action d'agitation sur le plan vertical et une oscillation simultanée autour d'un axe longitudinal, de façon à provoquer un effet de torsion sur la partie solide déshydratée.

10. Filtre-presse amélioré selon l'une quelconque des revendications précédentes, comprenant une alimentation double afin de fournir le matériau à filtrer aux deux extrémités longitudinales du groupe de plaques filtrantes (18) qui sont fermées en un ensemble, dans lequel la tête mobile (72) est reliée de manière stable à un conduit (84) qui, dans la configuration ouverte du groupe de plaques filtrantes (18), est espacé d'un raccord d'alimentation (80), le conduit (84) s'approchant du raccord d'alimentation (80) pendant le mouvement de fermeture des plaques filtrantes jusqu'à ce qu'il soit relié de manière étanche au liquide au raccord d'alimentation (80) dans la configuration fermée, en un ensemble de plaques filtrantes (18).

11. Filtre-presse amélioré selon l'une quelconque des revendications précédentes, dans lequel la structure de support (12) possède au moins une paire d'éléments longitudinaux (14) qui s'étendent linéairement dans la direction longitudinale (X-X), le groupe mobile équipé (24) comprenant un chariot (26) qui est équipé de roues (27) qui sont supportées sur des rails ou des guides linéaires (29) qui sont montés sur lesdits éléments longitudinaux (14).

12. Filtre-presse amélioré selon l'une quelconque des revendications précédentes, dans lequel un dispositif de lavage (50) destiné aux plaques filtrantes (18) est monté sur le groupe mobile équipé (24).

13. Filtre-presse amélioré selon la revendication 12, dans lequel le dispositif de lavage (50) comprend des buses de lavage qui sont montées ou formées sur une tige de lavage transversale (54) sur un outil de lavage mobile à la verticale (52) de façon à être introduites dans les espaces entre une plaque filtrante et la suivante lorsque le filtre-presse se trouve dans la configuration de décharge et de lavage illustrée sur la figure 1.
